Europäisches Patentamt

European Patent Office

Office européen des brevets

(19)

(11) Veröffentlichungsnummer: **0 002 761**
**B1**

(12) **EUROPÄISCHE PATENTSCHRIFT**

(45) Veröffentlichungstag der Patentschrift: 01.09.82

(51) Int. Cl.³: **C 08 L 77/00**

(21) Anmeldenummer: **78101734.8**

(22) Anmeldetag: **16.12.78**

(54) Schlagzähe Polyamidformmassen.

(30) Priorität: 29.12.77 DE 2758568
14.01.78 DE 2801585

(43) Veröffentlichungstag der Anmeldung:
11.07.79 Patentblatt 79/14

(45) Bekanntmachung des Hinweises auf die Patenterteilung:
01.09.82 Patentblatt 82/35

(84) Benannte Vertragsstaaten:
BE CH DE FR GB IT NL

(56) Entgegenhaltungen:
DE - A - 2 244 231
FR - A - 1 367 558
FR - A - 2 291 252
FR - A - 2 292 016
FR - A.- 2 378 823
GB - A - 1 403 797

(73) Patentinhaber: BAYER AG
Zentralbereich Patente, Marken und Lizenzen
D-5090 Leverkusen 1, Bayerwerk (DE)

(72) Erfinder: Korber, Helmut, Dr.
In der Hildscheid 18
D-5068 Odenthal (DE)
Erfinder: Tacke, Peter, Dr.
Brandenburger Strasse 12
D-4150 Krefeld (DE)
Erfinder: Fahnler, Friedrich, Ing.grad.
Wimmersweg 60
D-4150 Krefeld (DE)
Erfinder: Neuray, Dieter, Dr.
Buschstrasse 149
D-4150 Krefeld (DE)
Erfinder: Heydenreich, Frieder, Dr.
Kohlstrasse 34
D-4030 Ratingen 6 (DE)

Courier Press, Leamington Spa, England.

# 0 002 761

## Schlagzähe Polyamidformmassen

Gegenstand der Erfindung sind homogene Polyamid-Formmassen, die zur Verbesserung der Zähigkeit Pfropfpolymere von ungesättigten Säuren und/oder deren Derivaten auf Polyäthylene enthalten.

Die Schlagzähigkeit von Formteilen aus PA-Formmassen hängt erheblich von deren Wassergehalt ab. Im Trockenzustand sind die Teile empfindlich gegen Schlagbeanspruchung. Ihre bekannte hervorragende Schlagzähigkeit erreichen sie erst durch Konditionierung, d.h. nach Aufnahme von Wasser. Die Konditionierung der Polyamide ist jedoch ein zeitraubender Vorgang, der mehrere Tage dauert, zumal das Wasser nicht in Oberflächenschichten konzentriert sein darf, sondern gleichmäßig im ganzen Formteil verteilt sein muß.

Es ist deshalb wiederholt versucht worden, den Polyamiden durch Vermischen mit geeigneten Substanzen schon im Trockenzustand die Zähigkeit zu verleihen, die sie sonst nur durch Konditionierung erreichen.

Die Zähigkeit der Polyamidformmassen kann beispielsweise durch Einarbeitung von niedermolekularen Weichmachern verbessert werden. Solche Weichmacher besitzen jedoch folgende Nachteile:

1. Wegen ihres zumeist hohen Dampfdruckes unter den Bedingungen der Einarbeitung ins Polyamid verdampft ein Teil der Weichmacher.
2. Die niedermolekularen Weichmacher neigen zum Ausschwitzen.
3. Sie versagen bei tiefen Temperaturen.
4. Die Verbesserung der Zähigkeit ist mit einem erheblichen Abfall von Biegefestigkeit und E-Modul verbunden.

Es wurde auch versucht, die Zähigkeit von Polyamiden durch Zumischen von Polyäthylen zu verbessern. Handelsübliches Polyäthylen ist jedoch mit den Polyamiden nicht verträglich. Beim Knicktest der aus solchen Legierungen hergestellten Prüfkörper treten starke Abschieferungen auf.

Nach der DAS 1 694 802 kann die Verträglichkeit von Polyamid und Polyäthylen durch Zusatz von Copolymeren aus Äthylen und Acrylsäure (derivaten) verbessert werden. Sie bleibt jedoch unbefriedigend.

Aus der DAS 1 138 922 ist die Verbesserung der Zähigkeit von Polyamid-Formmassen durch Zumischen von Copolymerisaten aus Äthylen und Vinylacetat bekannt.

In zahlreichen Veröffentlichungen, beispielsweise US—PS 3 742 916, DT—PS 1 241 606, 1 544 706, 1 699 702 wird eine Anhebung der Zähigkeit von Polyamid-Formmassen durch Abmischen mit Copolymerisaten aus Äthylen und $\alpha,\beta$-ungesättigten Säuren oder deren Derivaten beschrieben.

Allen diesen Lösungsvorschlägen zur Verbesserung der Schlagzähigkeit von Polyamidformmassen haftet jedoch der Nachteil an, daß die Steifigkeit, damit der E-Modul, und die Biegefestigkeit relative stark abfallen, da die verwendeten Copolymerisate eine ausgeprägt weichmachende Wirkung aufweisen.

In der DOS 2 622 973 werden Legierungen aus Polyamid und zahlreichen Copolymeren und Pfropfpolymeren mit verbesserter Zähigkeit beschrieben. Außerdem sind aus der DOS 2 454 770 Mischungen aus Polyamid und Pfropfpolymerisaten von Acrylsäure und deren Derivaten auf $\alpha$-Olefin-Vinylester-Copolymerisate mit guter Zähigkeit bekannt. Die Pfropfpolymerisate werden hierzu umständlich durch Tränken der Copolymerisat-Granulate mit Pfropfmonomeren hergestellt, die den Polymerisationsinitiator gelöst enthalten. Die Legierungen zeigen aber nicht bei allen entscheidenden mechanischen Eingenschaften das angestrebte Niveau.

Der vorliegenden Erfindung lag daher die Aufgabe zugrunde, homogene schlagzähe Polyamidformmassen unter weitgehendem Erhalt der übrigen charakteristischen Polyamid-Eigenschaften zu entwickeln. Erfindungsgemäß gelang dies durch Legierung von Polyamiden mit Pfropfprodukten auf Basis Polyäthylen oder Äthylencopolymerisaten und aufgepfropften Einheiten von z.B. ungesättigten Carbonsäuren und/oder deren Derivaten, die gemäß der DOS 27 34 105.5 hergestellt wurden.

Gegenstand der vorliegenden Erfindung sind daher Polyamidlegierungen bestehend aus:

1. 60—99, vorzugsweise 70—95 Gew.-% Polyamiden
2. 1—40, vorzugsweise 5—30 Gew.-% von Pfropfprodukten bestehend aus
   a) 70—99, vorzugsweise 75—95 Gew.-%, einer Pfropfgrundlage aus Polyäthylen und/oder Copolymeren aus Äthylen und Vinylester mit bis zu 50 Gew.-% Vinylester, vorzugsweise Vinylacetat, und
   b) 1—30, vorzugsweise 5—25 Gew.-% von gepfropften Einheiten aus
      $\alpha$) 0—100, vorzugsweise 0—50 Gew.-% (Meth)acrylsäure und/oder
      $\beta$) 0—100, vorzugsweise 0—70 Gew.-% Ester der (Meth)acrylsäure mit 1—8, vorzugsweise 2—4 C-Atomen im Alkohol und/oder
      $\gamma$) 0—30, vorzugsweise 0—10 Gew.-% Acrylamid und/oder
      $\delta$) 0—30, vorzugsweise 0—20 Gew.-% Maleinsäureanhydrid,
3. 0—20, vorzugsweise 0—10 Gew.-% Polyäthylen, wobei die Summen aus 1—3, bzw. a bis b, bzw. $\alpha$—$\varphi$ jeweils 100 Gew.-% betragen müssen, dadurch gekennzeichnet, daß das Pfropfprodukt hergestellt worden ist, indem man die Schmelze des als Pfropfgrundlage dienenden Polymerisats unter

2

einem Druck von 1—150 bar bei einer Temperatur von 80—300°C mit Sauerstoff oder sauerstoffhaltigen Gasen unter intensiver Durchmischung maximal 10 Minuten in Kontakt bringt, unmittelbar danach bei Abwesenheit von Sauerstoff bzw. sauerstoffhaltigem Gas unter intensiver Durchmischung die aufzupfropfenden Monomere zufügt und nach der Polymerisation die Restmonomeren entfernt.

Wie bereits erwähnt, erfolgt die Herstellung der Pfropfpolymerisate, die in den erfindungsgemäßen Legierungen enthalten sind, nach einem, sehr rationellen Verfahren, bei dem die Pfropfgrundlage nicht, wie bisher üblich, als Lösung oder als Latex eingesetzt werden muß. Es ist auch keine langdauernde Quellung der Pfropfgrundlage durch die Pfropfmonomeren erforderlich, wie aus der DOS 2 454 770 bekannt. Vielmehr werden, wie in der DOS 27 34 105.5 beschrieben, Polyäthylen oder Copolymere aus Äthylen und Vinylacetat mit bis zu 50 Gew.-% Vinylacetat in geschmolzenem Zustand unter intensiver Duchmischung, vorzugsweise in einem Extruder, in einer 1. Stufe mit Sauerstoff umgesetzt, wobei Peroxidegruppen gebildet werden.—In einer 2. Stufe, vorzugsweise beim selben Schneckendurchgang, erfolt die Aufpfropfung der $\alpha$, $\beta$-ungesättigten Carbonsäuren und/oder deren Derivaten auf das Polyäthylen, wozu die in der 1. Stufe entstandenen Peroxidgruppen die Initiatorradikale liefern.

Als geeignete Pfropfmonomere sind beispielsweise Acrylsäure, Methacrylsäure, die Methyl, Äthyl-, n-Butyl-, tert.-Butyl-, 2-Äthylhexyl-Ester dieser Säuren, (Meth)acrylamid und Maleinsäureanhydrid zu nennen, besonders bevorzugt eignen sich Acrylsäure, n-Butylacrylat und tert. Butylacrylat.

Die Menge des in der 1. Stufe eingeführten aktiven Sauerstoffes (Peroxidgruppen) beträgt ca. 1000—10 000ppm. Während der Peroxidierung tritt keine nennenswerte Verringerung des Molgewichts der Pfropfgrundlage ein. Die aktivierten stellen sind gleichmäßig über die Pfropfgrundlage verteilt, so daß im Gegensatz zu bekannten Pfropfpolymerisationsverfahren sehr viele aktive Stellen zur Verfügung stehen. Folglich werden bei der nachfolgenden Pfropfpolymerisation viele verhältnismäßig kurze Seitenketten gebildet.

Die bisher bekannten Pfropfpolymerisate, die durch Radikalübertragung auf das Rückgratpolymere hergestellt werden, enthalten 1—2 Pfropfstellen pro Makromolekül. Die Molgewichte Mw der Seitenketten liegen im allgemeinen zwischen 300 000 und 1 000 000.—Die für die erfindungsgemäßen Polyamidformmassen verwendeten Pfropfpolymeren besitzen 10—50 Pfropfstellen pro Makromolekül, und die Molgewichtsmittel der Seitenketten liegen zwischen 5000 und 40 000.

Erfindungsgemäß eignen sich vorzugsweise aliphatische Polyamide mit einer relativen Viskosität von 2,3—4,8, vorzugsweise 2,7—4,3 (gemessen an einer 1 gew.-%igen Lösung in m-Kresol bei 20°C) zur Herstellung der Legierungen. Besonders bevorzugt wird Polyamid-6 und/oder Polyamid-6,6 aber auch deren Gemische und Block- bzw. Copolymere aus Caprolactam, Adipinsäure und Hexamethylendiamin verwendet.

Die Herstellung der erfindungsgemäßen Formmassen erfolgt vorzugsweise in handelsüblichen Doppelwellenextrudern, es sind aber auch Einwellenextruder und Kneter verwendbar.

Bei der Abmischung der gemäß der DOS 27 34 105.5 hergestellten Pfropfpolymerisate mit Polyamid tritt ein Anstieg der Schmelzviskosität ein. Dieser hohe Anstieg ist völlig unerwartet, da dies beim Abmischen von Polyamid mit den bisher nach üblichen und bekannten Methoden hergestellten Copolymeren und Pfropfpolymeren, die die gleiche Menge derselben Comonomeren enthalten, nicht beobachtet wird, wie die Vergleichsversuche zu den FR—PS Nr. 2 292 016 und FR—PS Nr. 2 378 823 beweisen.

Bei Verwendung der gemäß der DOS 27 34 105.5 hergestellten Pfropfpolymerisate können somit ausgehend von niederviskosen, preisgünstigen Polyamiden höherviskose, homogene Formmassen von hervorragender Zähigkeit, auch bei tiefen Temperaturen, hergestellt werden. Offenbar findet eine wesentlich bessere Pfropfung auf Polyamid statt als mit den bisher verwendeten Polymerisaten.

Bisher mußte bei der Herstellung hochviskoser Formmassen von hochwertigen hochviskosen Polyamiden ausgegangen werden, die erst durch Nachkondensation aus den niederviskosen Polyamiden hergestellt werden müssen.

Formkörper aus den erfindungsgemäßen Formmassen zeigen keinen Weißbruch an Knick-, Druck- und Schnittstellen sowie keine Entmischung. Sie besitzen ferner im Vergleich zu Formkörpern aus bekannten Polyamid-Polyolefin-Mischungen eine sehr gute Oberflächenbeschaffenheit.

Die erfindungsgemäßen Formmassen können auch Füll- und Verstärkungsstoffe, Verarbeitungshilfsmittel, Nucleierungsmittel, Pigmente und Stabilisatoren in bekannten Mengen enthalten. Als solche sind u.a. die folgenden zu nennen: Kreide, Quarz, Wollastonit, Microvit, Talkum, Ca-Sterat, $TiO_2$, Ruß, Cadmiumsulfid, sterisch gehinderte Phenole.

Die Formmassen eignen sich durch Extruder- und Spritzgußverarbeitung zur Herstellung von hochschlagzähigen Formkörpern.

Beispiele

Herstellung der Pfropfpolymeren I—XIV gemäß der DOS 27 34 105.5.

Die Pfropfung der in der Tabelle 1 aufgeführten Monomeren auf Hochdruckpolyäthylen, (BAYLON® 19 N 430 der Bayer AG) wurde in einem gegensinnig rotierenden Doppelwellen-Laborextruder vom Typ Point Eight der Firma Welding Inc. mit 20 mm Wellendurchmesser und 48 D Länge bei den dort angegebenen Bedingungen ausgeführt. Die Kompression der Schmelze wurde durch Vergrößerung des Kerndurchmessers der Wellen in den Kompressionszonen erreicht. Die Wellen waren mit einer durchgehenden Steigung von 1 D ausgerüstet.

Es wurden 80 l Luft pro Stunde unter 40—60 bar Druck in die Induktionszone und 240 l Luft pro Stunde unter 20—40 bar in die Oxidationszone gedrückt. In die Polymerisationszone wurden die Pfropfmonomeren unter 5 bar eindosiert. Anschließend wurden die nicht umgesetzten Monomeren verdampft und das Pfropfpolymerisat als Strang abgesetzt und granuliert.

Die in der Tabelle 2—4 angegebenen Propfprodukte wurden in einem Gleichsinnig rotierenden Doppelwellenextruder mit selbstreinigendem vairablen Schneckenbesatz von 32 mm Durchmesser und 38 D Länge bei den dort angegebenen Bedingungen hergestellt. Die Kompression der Schmelze wird durch Linksgewinde, Steigungssprünge und linksversetzte Knetblöcke im zweigängigen variablen Wellenbesatz erreicht. Es wurden 100 l Luft pro Stunde unter 20—40 bar in die Induktionszone und 300 l Luft pro Stunde unter 20—30 bar in die Oxydationszone gedrückt. In die Polymerisationszone wurden die Pfropfmonomeren unter 2 bar Druck eindosiert. Nach der Pfropfpolymerisation wurden die Restmonomeren entfernt und das Pfropfprodukt als Strang abgezogen und granuliert.

Bei den in Tabelle 2 angegebenen Pfropfprodukten wurde auf Baylon® 19 N 430, in Tabelle 3 auf Baylon® 10 M 460 (Copolymerisat aus Äthylen u. 8 Gew.-% Vinylacetat) und in Tabelle 4 auf Levapren® 450 (Copolymerisat aus Äthylene und 45 Gew.-% Vinylacetat) gepfropft.

Erklärung der Abkürzungen:

| | | |
|---|---|---|
| AS | Acrylsäure | Mengenangaben |
| MAS | Methacrylsäure | sind immer |
| EA | Äthylacrylat | Gew.-% |
| n-BA | n-Butylacrylat | |
| t-BA | tert.-Butylacrylat | |
| OA | Äthylhexylacrylat | |
| AA | Acrylamid | |
| MSA | Maleinsäureanhydrid | |

Tabelle 1

| Pfropfprodukt | I | II | III | IV | V | VI | VII a |
|---|---|---|---|---|---|---|---|
| Durchsatz [g/h] | 950 | 950 | 1900 | 750 | 750 | 750 | 750 |
| Wellendrehzahl (U/min) | 75 | 75 | 115 | 50 | 50 | 50 | 50 |
| mittlere Verweilzeit [min] | 7 | 7 | 2,5 | 10 | 10 | 10 | 10 |
| Peroxidgehalt nach Ox [ppm] | 1500 | 1400 | 700 | 1000 | 1000 | 1000 | 1000 |
| MFI Bed E nach Ox [g/10 min] | 6 | 7,5 | 6,8 | 7,2 | 7,1 | 7,2 | 7,3 |
| Monomerdosierung [g/h] | 70 | 130 | 300 | 130 | 120 | 130 | 150 |
| Monomerzusammensetzung | AS | 15 Tln. MSA 85 Tln. n-BA | 20 Tln. AS 80 Tln. n-BA | 10 Tln AS 90 Tln. t-BA | n-BA | OA | 1 Tl. AA 10 Tln. AS 89 Tln. n-BA |
| Umsatz [%] | 99 | 85 | 95 | 65 | 78 | 72 | 53 |
| Produktzusammensetzung | 7,3 % AS | 2,0 % MSA 9,8 % n-BA | 3,1 % AS 12 % n-BA | 1,1 % AS 10,6 % t-BA | 12,5 % n-BA | 12,3 % OA | 0,2 % A 1,5 % AS 9 % n-BA |
| Restperoxidgehalt [ppm] | 620 | 580 | 280 | 340 | 380 | 410 | 290 |
| MFI Bed.E des Prod. [g/10 min] | 1,8 | 0,5 | 3,7 | 5,2 | 4,8 | 5,0 | 2,3 |

Tabelle 1 (Bedingungen) [Fortsetzung]

| Pfropfprodukt | | I | II | III | IV | V | VI | VII a |
|---|---|---|---|---|---|---|---|---|
| Einzugs- | 2D | 110° | 110° | 110° | 110° | 110° | 110° | 110° |
| Aufschmelz- | 5D | 180° | 180° | 180° | 180° | 180° | 180° | 180° |
| Kompressions- | 2D | 180° | 180° | 180° | 180° | 180° | 180° | 180° |
| Induktions- | 3D | 225° | 225° | 230° | 215° | 215° | 215° | 215° |
| Oxydations- | 6D | 190° | 190° | 210° | 170° | 170° | 170° | 170° |
| Kompressions- | 2D | 190° | 190° | 200° | 170° | 170° | 170° | 170° |
| Entgasungs- | 4D | 170° | 170° | 190° | 170° | 150° | 150° | 170° |
| Kompressions- | 2D | 160° | 150° | 190° | 170° | 150° | 150° | 170° |
| Polymerisations- | 8D | 140° | 150° | 195° | 170° | 150° | 150° | 190° |
| Kompressions- | 2D | 140° | 150° | 195° | 170° | 150° | 150° | 190° |
| Verdampfer- | 7D | 140° | 150° | 195° | 170° | 150° | 150° | 190° |
| Extrusionszone | 5D | 140° | 150° | 195° | 170° | 150° | 150° | 190° |
| | 48D | | | | | | | |

5

## 0 002 761

Tabelle 2

| Pfropfprodukt | | VII b | VIII |
|---|---|---|---|
| Durchsatz g/h | | 3600 | 3800 |
| Wellendrehzahl | | 30 | 40 |
| mittlere Verweilzeit Min. | | 7,5 | 7,0 |
| Peroxidgehalt nach Ox. ppm | | 1200 | 1000 |
| MFI Be.d E nach Ox [g/10 min] | | 4,3 | 5,4 |
| Monomerdosierung g/h | | 450 | 360 |
| Monomerzusammensetzung | | 1 Tl. AA | |
| | | 20 Tln AS | t-BA |
| | | 79 Tln n-BA | |
| Produktzusammensetzung | | 0,2 % AA | |
| | | 2,2 % AS | 7,6 % t-BA |
| | | 8,9 % n-BA | |
| Restperoxidgehalt ppm | | 540 | 460 |
| Umsatz % | | 90 | 80 |
| MFI Bed. E des Prod. | | 0,4 | 1,2 |

Tabelle 2 (Bedingungen)

| Propfprodukt | | VII b | | VIII |
|---|---|---|---|---|
| Einzugs- | 2D | 100° | | 100° |
| Aufschmelz- | 4D | 140° | | 140° |
| Kompressions- | 1D | 180° | | 180° |
| Induktions- | 2D | 230° | | 235° |
| Oxydations- | 5D | 190° | | 210° |
| Kompressions- | 1D | 180° | | 200° |
| Entgasungs- | 2D | 170° | | 190° |
| Kompressions- | 1D | 180° | | 200° |
| Polymerisations- | 10D | 180° | | 205° |
| Kompressions- | 1D | 180° | | 205° |
| Verdampfer- | 6D | 190° | | 200° |
| Extrusionszone | 3D | 210° | | 200° |

6

**0 002 761**

### Tabelle 3

| Pfropfprodukt | IX | X | XI |
|---|---|---|---|
| Durchsatz g/h | 3600 | 3600 | 3600 |
| Wellendrehzahl U/Min | 30 | 30 | 30 |
| mittlere Verweilzeit Min. | 7,5 | 7,5 | 7,5 |
| Peroxidgehalt nach Ox. ppm | 1300 | 1300 | 1300 |
| MFI Bed.E nach Ox [g/10 min] | 4,6 | 4,6 | 4,6 |
| Monomerdosierung g/h | 180 | 450 | 400 |
| Monomerzusammensetzung | AS | 20 Tln. AS<br>80 Tln. n-BA | 1 Tl. AA<br>20 Tln. AS<br>79 Tln. n-BA |
| Produktzusammensetzung | 4,9 % AS | 2,4 % AS<br>9,4 n-BA | 0,2 % AA<br>1,6 % AS<br>8,5 % n-BA |
| Restperoxidgehalt ppm | 510 | 480 | 460 |
| Umsatz % | 99 | 95 | 96 |
| MFI Bd. E des Prod. | 1,5 | 2,1 | 1,8 |

### Tabelle 3 (Bedingungen)

| Propfprodukt | | IX | X | XI |
|---|---|---|---|---|
| Einzugs- | 2D | 100° | 100° | 100° |
| Aufschmelz- | 4D | 140° | 140° | 140° |
| Kompressions- | 1D | 180° | 180° | 180° |
| Induktions- | 2D | 235° | 235° | 235° |
| Oxydations- | 5D | 210° | 210° | 210° |
| Kompressions- | 1D | 200° | 200° | 200° |
| Entgasungs- | 2D | 190° | 190° | 190° |
| Kompressions- | 1D | 170° | 180° | 180° |
| Polymerisations- | 10D | 150° | 180° | 180° |
| Kompressions- | 1D | 150° | 180° | 150° |
| Verdampfer- | 6D | 170° | 190° | 190° |
| Extrusionszone | 3D | 170° | 200° | 200° |

7

Tabelle 4

| Propfprodukt | | XII | XIII | XIV |
|---|---|---|---|---|
| Durchsatz g/h | | 2500 | 2500 | 2500 |
| Wellendrehzahl U/min. | | 25 | 25 | 25 |
| mittlere Verweilzeit Min. | | 10,8 | 10,8 | 10,8 |
| Peroxidgehalt nach Ox. ppm | | 2500 | 2500 | 2500 |
| Mooney-Viskosität | | 13 | 13 | 13 |
| Monomerdosierung g/h | | 120 | 320 | 260 |
| Monomerzusammensetzung | | AS | 20 Tln. AS 80 Tln. n-BA | t-BA |
| Produktzusammensetzung | | 4,6 % AS | 2,3 % AS 9,5 % n-BA | 8,7 % t-BA |
| Restperoxidgehalt ppm | | 820 | 850 | 870 |
| Umsatz % | | 98 | 93 | 83 |
| Mooney-Viskosität | | 32 | 27 | 25 |

Tabelle 4 (Bedingungen)

| Pfropfprodukt | | XII | XIII | XIV |
|---|---|---|---|---|
| Einzugs- | 2D | 60° | 60° | 60° |
| Aufschmelz- | 4D | 120° | 120° | 120° |
| Kompressions- | 1D | 120° | 120° | 120° |
| Induktions- | 2D | 210° | 210° | 210° |
| Oxydations- | 5D | 180° | 180° | 180° |
| Kompressions- | 1D | 120° | 120° | 120° |
| Entgasungs- | 2D | 100° | 100° | 100° |
| Kompressions- | 1D | 120° | 160° | 170° |
| Polymerisations- | 10D | 150° | 180° | 190° |
| Kompressions- | 1D | 150° | 180° | 190° |
| Verdampfer- | 6D | 170° | 180° | 190° |
| Extrusionszone | 3D | 170° | 180° | 190° |

Beispiel 1—18

Die Einarbeitung der Pfropfprodukte I—XIV erfolgte in einem handelsüblichen Dopperwellenextruder ZSK 53 der Firma Werner und Pleiderer bei Temperaturen von 265 bis 290°C.

Die Herstellung, Zusammensetzung der Legierungen und ihre Eigenschaften sind in Tabelle 5 zusammengestellt.

Die relativen Lösungsviskositäten ($\mu$ rel) wurden an 1 %igen Lösungen der Produkte in m-Kresol bei 20°C gemessen.

Tabelle 5, Herstellung und Eigenschaften der Legierungen aus Polyamid und den Pfropfpolymeren

| Beisp. Nr. | Polyamid/ $\eta$ rel | Pfropfpoly- meres Gew.-% | Sonstige Zusätze | Massetemp. °C | $\eta$ rel der Legierung | Kerbschlag- zähigkeit kJ/m² | Eigenschaften | |
|---|---|---|---|---|---|---|---|---|
| | | | | | | | Biegefestigkeit | Homogenität |
| 1 | PA-6/2,86 | I/10 | — | 265 | 3,37 | 22,3 | 95,3 | sehr gut |
| 2 | " | II/10 | — | 265 | 3,28 | 21,6 | 96 | " |
| 3 | " | III/10 | — | 265 | 3,31 | 23,9 | 94,2 | " |
| 4 | " | IV/10 | — | 265 | 3,43 | 22,6 | 97,1 | " |
| 5 | " Vergleichsprodukt | 10 % Copoly- meres aus Äthy- len mit 4 Gew.% % AS und 7 Gew.-% t-BA MFI=6,5 | — | 265 | 3,08 | 18,8 | 97 | " |
| 6 | PA-6,6/3,06 | V/10 | — | 285 | 3,58 | 25,2 | 95,3 | " |
| 8 | " | VIIa/10 | — | 285 | 3,62 | 27,8 | 93,8 | " |
| 9 | " | VIIb/20 | — | 285 | 3,85 | 43,9 | 86,6 | " |
| 7 | " | VI/10 | — | 285 | 3,47 | 22,8 | 94,5 | " |
| 10 | " | VIII/10 | — | 285 | 3,42 | 19,1 | 95 | " |
| 11 | " | IX/10 | 10 % Poly- äthylen | 280 | 3,35 | 23,2 | 96,2 | gut |
| 12 | " | X/10 | 10 % Tal- kum | 290 | 3,57 | 15,7 | 93,4 | " |
| 13 | Gemisch aus je 50 % PA-6 u. 6,6 | XI/20 | — | 280 | 3,78 | 41,2 | 83 | sehr gut |

Fortsetzung Tabelle 5, Herstellung und Eigenschaften bei der Legierung aus Polyamid und den Pfropfpolymeren

| Beisp. Nr. | Polyamid/ $\eta$ rel | Pfropfpoly- meres/Gew.-% | Sonstige Zusätze | Massetemp. °C | $\eta$ rel der Legierung | Kerbschlag- zähigkeit kJ/m² | Eigenschaften | Homogeni- tät |
|---|---|---|---|---|---|---|---|---|
| | | | | | | | Biegefestig- keit MPa | |
| 14 | Gemisch aus je 50 % PA-6 u.-6,6 | XII/10 | — | 280 | 3,41 | 24,5 | 98,2 | sehr gut |
| 15 | „ | XIII/10 | — | 280 | 3.45 | 21,4 | 95,1 | „ |
| 16 | „ | XIV/10 | — | 280 | 3,52 | 23,6 | 96,9 | „ |
| 17 | PA-6,6/3,98 | IV/10 | — | 285 | 4,39 | 32,8 | 94,6 | „ |
| 18 | „ | IV/10 | — | 285 | 4,73 | 68,3 | 84,7 | „ |

**0 002 761**

1.) Vergleichsversuch gemäß FR—PS Nr. 2 292 016

a: 100 Teile eines Copolymerisates in Granulatform aus 92 Gew.-% Äthylen und 8 Gew.-% Vinylacetat und 5 Teile Acrylsäure, die 0,05 Teile Benzoylperoxid gelöst enthält, werden 10 Minuten gemischt, Nach einer Verweilzeit von 4 Stunden wird in einem Extruder mit einer Schnecke gleicher Gangtiefe und einer Schneckenlänge von 27 D bei einer Drehzahl von 12 U/min aufgeschmolzen und eine Temperatur von 140° C gehalten. Man erhält ein Produkt mit einer Säurezahl von 43.

b: 10 Gew.-% des nach a) hergestellten Pfropfprodukts werden mit 90 Gew.-% Polyamid-6 mit einer relativen Viskosität $\mu_{rel}$=2,86 in einem handelsüblichen Doppelwellenextruder beit Temperaturen von 260°C gemischt. Das Produkt hat einen Schmelzindex $MFI_{250°C}^{1,2kp}$ von 15,3 g/10 min.

2.) Vergleichsversuch gemäß FR—PS Nr. 2 378 823

Teilen bezogen auf die Acrylsäure, Benzoylperoxid bei einer Temperatur von 80°C 5 Stunden polymerisiert. Man erhält ein Pfropfprodukt mit einer Säurezahl von 23.

siert. Man erhält ein Pfropfprodukt mit einer Säurezahl von 23.

b: 10 Gew.-% dieses Pfropfproduktes werden, wie in 1 b) angegeben, mit 90 Gew.-% Polyamid-6 zu einer Formmasse vermischt, die einen Schmelzindex $MFI_{250°C}^{1,2kp}$ von 11,4 g/10 min. aufweist.

Beispiele 19 und 20

10. Teile des Pfropfproduktes III bzw. IX werden, wie in Vergleichsversuch 1 b) angegeben, mit 90 Gew.-% Polyamid-6 zu Formmassen verarbeitet, die einen Schmelzindex $MFI_{250°C}^{1,2kp}$ von 0,2 bzw. 0,8 g/10 min. aufweisen.

**Patentansprüche**

1) Polyamidformmassen bestehend aus

1. 60—99 Gew.-% Polyamid
2. 1—40 Gew.-% von Pfropfprodukten bestehend aus:
   a) 70—99 Gew.-% einer Pfropfgrundlage aus Polyäthylen und/oder Copolymeren aus Äthylen und Vinylester mit bis zu 50 Gew.-% Vinylester und
   b) 1—30 Gew.-% von gepfropften Einheiten aus
      $\alpha$) 0—100 Gew.-% (meth)arylsäure und/oder
      $\beta$) 0—100 Gew.-% Ester der (Meth)-acrylsäure mit 1—8 C-Atomen im Alkohol und/oder
      $\gamma$) 0—30 Gew.-% Acrylamid und/oder
      $\delta$) 0—30 Gew.-% Maleinsäureanhydrid und
3. 0—20 Gew.-% Polyäthylen

wobei die Summen aus 1—3, bzw. a—b, bzw. $\alpha$—$\delta$, jeweils 100 Gew.% betragen müssen, dadurch gekennzeichnet, daß das Pfropfprodukt hergestellt worden ist, indem man die Schmelze des als Pfropfgrundlage dienenden Polymerisats unter einem Druck von 1—150 bar bei einer Temperatur von 80—300°C mit Sauerstoff oder sauerstoffhaltigen Gasen unter intensiver Durchmischung maximal 10 Minuten in Kontakt bringt, unmittelbar danach bei Abwesenheit von Sauerstoff bzw. sauerstoffhaltigem Gas unter intersiver Durchmischung die aufzupfropfenden Monomere zufügt und nach der Polymerisation die Restmonomeren entfernt.

2) Polyamidformmassen nach Anspruch 1, dadurch gekennzeichnet, daß die Durchmischung in einem Extruder erfolgt.

3) Polyamidformmassen nach Ansprüchen 1 und 2, dadurch gekennzeichnet, daß die Seitenketten des Pfropfproduktes ein Molgewichtsmittel zwischen 5000 und 40000 aufweisen.

4) Formmassen gemäß Ansprüchen 1—3, dadurch gekennzeichnet, daß die Polyamidkomponente eine rel. Viskosität von 2,3—4,8 aufweist.

5) Formmassen gemäß Ansprüchen 1—4, dadurch gekennzeichnet, daß als Polyamid Polyamid-6 oder Polyamid-6,6 verwendet, wird.

6) Formmassen gemäß Ansprüchen 1—5, dadurch gekennzeichnet, daß als Pfropfmonomere (Meth)acrylsäure, n-Butylacrylat und/oder tert.-Butylacrylat verwendet werden.

7) Formkörper aus Formmassen gemäß Ansprüchen 1—6.

**Claims**

1) Polyamide moulding compositions consisting of

1. 60—99% by weight of polyamide
2. 1—40% by weight of graft products consisting of:
   a) 70—99% by weight of a graft substrate of polyethylene and/or copolymers of ethylene and vinyl ester with up to 50% by weight of vinyl ester and
   b) 1—30% by weight of grafted units of
      $\alpha$) 0—100% by weight of (meth)acrylic acid and/or
      $\beta$) 0—100% by weight of esters of (meth)-acrylic acid formed from an alcohol having 1—8 C atoms and/or.

11

γ) 0—30% by weight of acrylamide and/or

δ) 0—30% by weight of maleic acid anhydride and

3. 0—20% by weight of polyethylene,

and the sums of 1—3, a—b, and $\alpha$—$\delta$ must in each case be 100% by weight,

characterised in that the graft product has been prepared by bringing the melt of the polymer used as graft substrate into contact with oxygen or oxygen-containing gases at a pressure of 1—150 bar and at a temperature of 80—300°C under vigorous mixing for a maximum of 10 minutes, adding immediately thereafter the monomers which are to be grafted under vigorous mixing in the absence of oxygen and oxygen-containing gas, and removing the residual monomers after polymerisation.

2) Polyamide moulding compositions according to claim 1, characterised in that the mixing takes place in an extruder.

3) Polyamide moulding compositions according to claims 1 and 2, characterised in that the side chains of the graft product have an average molecular weight between 5,000 and 40,000.

4) Moulding compositions according to claims 1—3, characterised in that the polyamide component has a relative viscosity of 2.3—4.8.

5) Moulding compositions according to claims 1—4, characterised in that the polyamide used is polyamide-6 or polyamide-6.6.

6) Moulding compositions according to claims 1—5, characterised in that the graft monomers used are (meth)acrylic acid, n-butyl acrylate and/or tert.-butyl acrylate.

7) Moulded articles made from moulding compositions according to claims 1—6.


**Revendications**

1) Matières à mouler en polyamide consistant en:

1. 60—99% en poids de polyamides

2. 1—40% en poids de produits greffés consistant en:
   a) 70—90% en poids d'un support de greffage en polyéthylène et/ou copolymères d'éthylène et d'ester vinylique contenant jusqu'à 50% en poids d'ester vinylique, et
   b) 1—30% en poids de motifs greffés de
      $\alpha$) 0—100% en poids d'acide (méth)acrylique et/ou
      $\beta$) 0—100% en poids d'ester de l'acide (méth)acrylique d'un alcool en $C_1$—$C_8$, et/ou
      $\gamma$) 0—30% en poids d'acrylamide et/ou
      $\delta$) 0—30% en poids d'anhydride maléique,

3. 0—20% en poids de polyéthylène, les sommes de 1 à 3, de a et b et de $\alpha$—$\delta$, respectivement, étant chaque fois de 100% en poids, caractérisés en ce que l'on a préparé le produit greffé en mettant en contact la masse fondue du polymère servant de base de greffage avec l'oxygène ou des gaz contenant de l'oxygène, pendant un maximum de 10 min sous agitation vigoureuse sous une pression de 1—150 bars, à une température de 80—300°C, en ajoutant ensuite directement les monomères à greffet en l'absence d'oxygène ou de gaz contenant de l'oxygène avec malaxage vigoureux, et an éliminant les monomères résiduels après la polymérisation.

2) Matières à moulter en polyamide selon la revendication, caractérisées en ce que le malaxage s'effectue dans une extrudeuse.

3) Matières à mouler en polyamide selon les revendications 1 et 2, caractérisées en ce que les chaînes latérales du produit greffé ont une moyenne du poids moléculaire entre 5 000 et 40 000.

4) Matières à mouler selon les revendications 1—3, caractérisées en ce que le composant polyamide présente une viscosité relative de 2,3—4,8.

5) Matières à mouler selon les revendications 1—4, caractérisées en ce qu'on utilise comme polyamide le polyamide-6 ou le polyamide-6,6.

6) Matières à mouler selon les revendications 1—5, caractérisées en ce qu'on utilise comme monomères à greffer l'acide (méth)acrylique, l'acrylate de n-butyle et/ou l'acrylate de tertbutyle.

7) Pièces moulées obtenues à partir de matières à mouler selon les revendications 1—6.